# EUROPÄISCHE PATENTSCHRIFT

(11) **EP 1 240 793 B1**
(45) Veröffentlichungstag und Bekanntmachung des Hinweises auf die Patenterteilung: **21.07.2004**
(21) Anmeldenummer: 00943555.3
(22) Anmeldetag: 05.05.2000
(51) Int. Cl.: H04Q 7/32

(54) **FUNKSTATION MIT MEHREREN TEILNEHMERIDENTIFIZIERUNGSMODULEN**
RADIO STATION WITH SEVERAL USER IDENTIFICATION MODULES
STATION RADIO AVEC PLUSIEURS MODULES D'IDENTIFICATION D'ABONNE

(30) Priorität: 21.10.1999 DE 19950796
(43) Veröffentlichungstag der Anmeldung: 18.09.2002
(73) Patentinhaber: SIEMENS AKTIENGESELLSCHAFT, 80333 München (DE)
(72) Erfinder: STELZER, Manfred, D-82152 Krailling (DE)
(86) Internationale Anmeldenummer: PCT/DE2000/001419
(87) Internationale Veröffentlichungsnummer: WO 2001/030097

(56) Entgegenhaltungen:
- WO-A-99/62282
- DE-A- 4 118 993
- US-A- 5 987 325

## Beschreibung

Die Erfindung betrifft eine Funkstation, insbesondere ein Mobilfunktelefon.

Im Zuge der rasanten Entwicklung unterschiedlicher Mobilfunksysteme und deren rascher globaler Ausbreitung findet ein Mobilfunkteilnehmer, der eine globale Erreichbarkeit wünscht, einerseits Regionen vor, die durch unterschiedliche Mobilfunknetze mehrfach bedeckt sind, und andererseits Regionen vor, die jeweils durch unterschiedliche Mobilfunknetze bedeckt sind.

Um nun mittels unterschiedlicher Mobilfunknetze eine weltweite Verfügbarkeit mobiler Kommunikation zu gewährleisten, sind Mobilfunksysteme, wie beispielsweise das GSM (global system for mobile communications), bekannt, die ein weltweites Roaming vorsehen, so daß ein Mobilfunkteilnehmer, innerhalb dieses Mobilfunksystems mittels eines Teilnehmeridentifizierungsmodul eindeutig identifizierbar und somit auch erreichbar ist. Eine weitere Verbesserung der Erreichbarkeit ergibt sich durch neuere sogenannte Multiband-Mobilfunktelefone, die innerhalb eines Mobilfunksystems auch in Mobilfunknetzen, die auf unterschiedlichen Trägerfrequenzen basieren (beispielsweise in Deutschland ein E-Netz und ein D-Netz), Mobilkommunikation ermöglichen.

Derartige Mobilfunktelefone, die auf der Basis eines Teilnehmeridentifizierungsmoduls betrieben werden, weisen jedoch den Nachteil auf, daß der Mobilfunkteilnehmer über das Teilnehmeridentifizierungsmodul vertraglich fest an einen Netzbetreiber und somit auch an dessen Vergebührungs- und Roamingabkommen mit anderen Netzbetreibern gebunden ist. Dies hat außerdem zur Folge, daß der Teilnehmer direkt an seinem Mobilfunktelefon nur über eine Rufnummer zu erreichen ist, die ebenfalls fest diesem Teilnehmeridentifizierungsmodul zugeordnet ist.

Dokument DE 411 89 93 offenbart eine Mobiltelefonanordnung mit der Möglichkeit der parallelen Nutzung von zwei unterschiedlichen Teilnehmernummern auf einer Benutzerkarte für unterschiedliche Netze. Die Benutzerkarte entspricht den allgemein gebräuchlichen Karten und enthält einen Prozessor, Speicher und weitere Peripherieeinheiten für jede gespeicherte Teilnehmernummer. Die Mobiltelefonanordnung verfügt über Sende- und Empfangseinrichtungen zum parallelen Betrieb in unterschiedlichen Netzen, und kann in diesen parallel Anrufe empfangen und aufbauen.

Der Erfindung liegt nun das Problem zugrunde, eine Funkstation anzugeben, die eine erweiterte Erreichbarkeit und flexiblere Kommunikationsmöglichkeiten bietet.

Dieses Problem wird durch die Merkmale des unabhängigen Patentanspruchs 1 gelöst. Vorteilhafte Weiterbildungen der Erfindung ergeben sich aus den Unteransprüchen.

Die Erfindung beruht demnach auf dem Gedanken, eine Funkstation mit mehreren Teilnehmeridentifizierungsmodulen zu betreiben, wobei unterschiedliche Teilnehmeridentifizierungsmodule zur Identifizierung in unterschiedlichen Kommunikationsnetzen vorgesehen sind, und die Empfangseinrichtung der Funkstation so auszulegen, daß ein paralleler Empfang von Steuerdaten, die unterschiedlichen Kommunikationsnetzen zugeordnet sind, zu ermöglichen, wobei dieser Empfang auf der Basis der entsprechenden unterschiedlichen Teilnehmeridentifizierungsmodule erfolgt.

Unter Kommunikationsnetz versteht man dabei auch ein Mobilfunknetz, das eindeutig einem Netzbetreiber zugeordnet ist; unterschiedliche Kommunikationsnetze können dabei gemäß eines gleichen Mobilfunkstandards oder gemäß unterschiedlicher Mobilfunkstandards funktionieren. Paralleler Empfang von Steuerdaten bedeutet im Rahmen dieser Anmeldung auch gleichzeitiger oder abwechselnder Empfang von Steuerdaten, wobei beim abwechselnden Empfang automatisch oder manuell zwischen dem Empfang unterschiedlicher Steuerdaten, die auf unterschiedlichen Kommunikationsnetzen basieren, umgeschaltet werden kann.

Die mit der Neuerung verbundenen Vorteile liegen vor allem darin, daß ein Benutzer durch eine Funkstation gleichzeitig in mehreren Kommunikationsnetzen identifiziert und eingebucht sein kann und somit auch erreichbar ist. Dies führt auch zu einer erweiterten Auswahl von Rufnummern, unter welchen der Benutzer erreichbar sein will, einer verbesserten Erreichbarkeit, einer größeren Auswahl an zugreifbaren Telekommunikationsdiensten und flexibleren Vergebührungsoptionen.

Die erfindung sieht vor, daß neben dem parallelen Empfang von Steuerdaten auch ein paralleler Empfang von Nutzdaten, ein paralleles Senden von Steuerdaten und/oder ein paralleles Senden von Nutzdaten möglich ist, wobei die parallelen Sende- bzw. Empfangsvorgänge auf unterschiedlichen Teilnehmeridentifizierungsmodulen basieren.

Dies ermöglicht auch ein Weiterschalten von Kommunikationsverbindungen in einem ersten Kommunikationsnetz auf Kommunikaitonsverbindungen in einem zweiten Kommunikationsnetz. Außerdem ist dadurch ein Umschalten (Makeln) zwischen Kommunikaitonsverbindungen die mittels unterschiedlicher Kommunikationsnetze realisiert sind, durchführbar.

Eine weitere Ausgestaltung der Erfindung sieht vor, daß der Betrieb der Funkstation auf der Basis einzelner Teilnehmeridentifizierungsmodule sperrbar ist, und damit eine selektive Erreichbarkeit und Vergebührung möglich ist.

Die Erfindung wird im folgenden anhand bevorzugter Ausführungsbeispiele näher beschrieben, zu deren Erläuterung die nachstehend aufgelisteten Figuren dienen:
Figur 1 vereinfachtes Blockschaltbild von zwei Kommunikationsnetzen;
Figur 2 Prinzipschaltbild eines Ausführungsbeispiels der Erfindung.

Nationale Regulierungsbehörden teilen einen für ein Funksystem bzw. Mobilfunksystem, wie beispielsweise das GSM (Global System for Mobile Communication)-System, vorgesehenen Frequenzbereich in unterschiedliche Frequenzbänder auf, die dann unterschiedlichen Netzbetreibern, wie beispielsweise D1, D2, E-Netze, zugeteilt werden. Dabei gibt es auch geographische Gebiete, die durch unterschiedliche Netzbetreiber gleichzeitig abgedeckt sind. Ein Mobilfunknetz (Kommunikationsnetz) eines Betreibers wird auch als Public Land Mobile Network (PLMN) bezeichnet. Unter Kommunikationsnetz versteht man auch ein Monilfunknetz, das einem Mobilfunknetzbetreiber zugeordnet ist. Die Kommunikation in einem derartigen Kommunikationsnetz erfolgt auf der Basis eines Teilnehmeridentifizierungsmoduls. Roaming-Abkommen zwischen mehreren Netzbetreibern ermöglichen auch eine Erreichbarkeit und Kommunikation in weiteren Kommunikationsnetzen.

Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme, wie CDMA-Systeme, insbesondere Wide-Band-CDMA-Systeme, gegebenenfalls in Kombination mit einem TD(Time Division)/CDMA-System abgebildet werden.

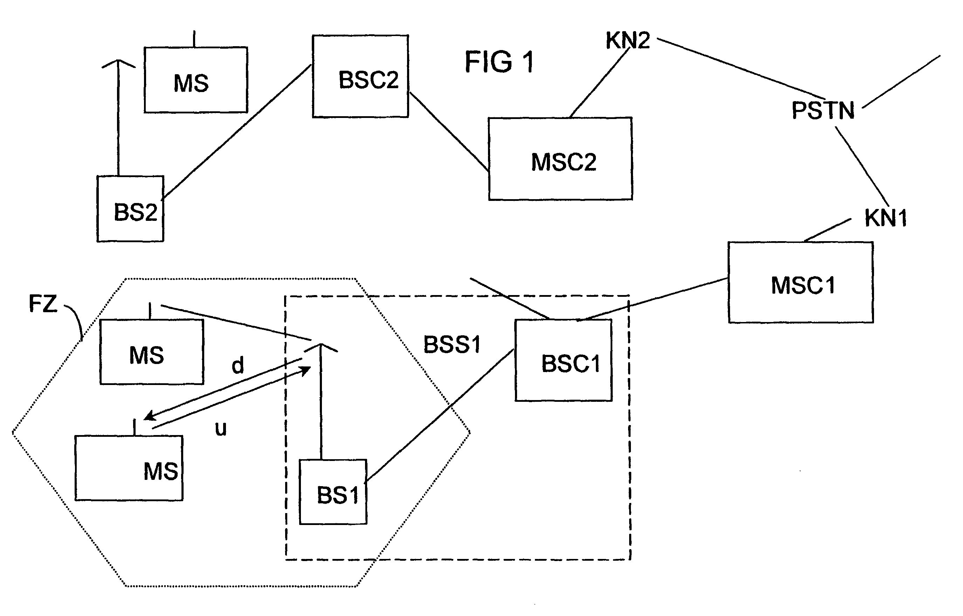

In Figur 1 sind zwei zellulare Mobilfunknetze KN1, KN2, die auf gleichen oder unterschiedlichen Mobilfunksystemen, wie beispielsweise dem GSM (Global System for Mobile Communication)-System oder einem CDMA-System, basieren können, dargestellt, welche aus einer Vielzahl von Mobilvermittlungsstellen MSC bestehen, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroler BSC verbunden, der auch durch ein Datenverarbeitungssystem gebildet sein kann.

Jeder Basisstationscontroler BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignale Informationen innerhalb von Funkkanälen die innerhalb von Frequenzbändern liegen, übertragen werden. Die Reichweite der Funksignale einer Basisstation definieren im wesentlichen eine Funkzelle FZ.

Basisstationen BS und ein Basisstationscontroler BSC können zu einem Basisstationssystem BSS zusammengefaßt werden.

Mittels Vielfachzugriffsverfahren können Daten über eine Funkschnittstelle effizient übertragen, separiert und einer oder mehreren bestimmten Verbindungen bzw. dem entsprechenden Teilnehmer zugeteilt werden können. Dazu kann ein Zeitvielfachzugriff TDMA, ein Frequenzvielfachzugriff FDMA, ein Codevielfachzugriff CDMA oder eine Kombination aus mehreren dieser Vielfachzugriffsverfahren eingesetzt werden.

Die so entstehenden physikalischen Kanäle werden nach einem festgelegten Schema logischen Kanälen zugeordnet. Bei den logischen Kanälen unterscheidet man grundsätzlich zwei Arten: Signalisierungskanäle (bzw. Steuerkanäle) zur Übertragung von Signalisierungsinformationen (bzw. Steuerdaten) und Verkehrskanäle (Traffic Channel TCH) zur Übertragung von Nutzdaten.

Die Kontrolle des Zugangs zu einem Mobilfunknetz wird in der Regel über ein Teilnehmeridentifizierungsmodul und eine Geheimzahl-Eingabe realisiert. Stimmen die eingegebenen Daten mit den in seinem Berechtigungsprofil hinterlegten Daten überein, so erhält der Benutzer Zugang zum Kommunikationsnetz. Damit ist der Benutzer auf der Basis von auf dem Teilnehmeridentifizierungsmodul SIM gespeicherten Informationen in dem Mobilfunknetz eingebucht und somit erreichbar. Um die Erreichbarkeit auch über einen längeren Zeitraum gewährleisten zu können, ist von Zeit zu Zeit der Empfang von Steuerdaten und gegebenenfalls auch das Senden von Steuerdaten erforderlich.

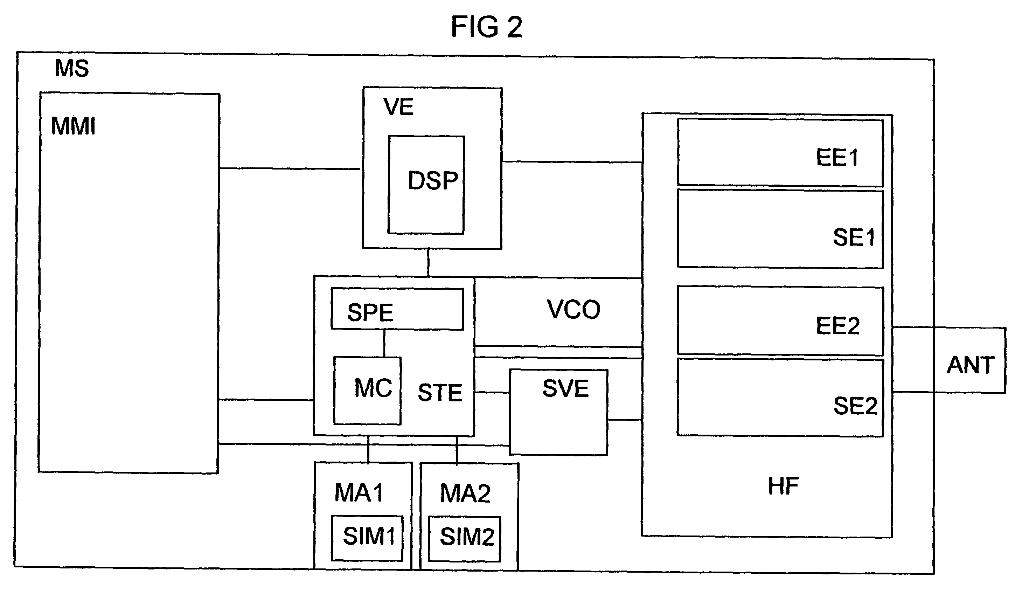

Figur 2 zeigt eine Funkstation, die eine Mobilstation MS sein kann, bestehend aus einer Bedieneinheit MMI, einer Steuereinrichtung STE, einer Verarbeitungseinrichtung VE, einer Stromversorgungseinrichtung SVE, einer Empfangseinrichtung und einer Sendeeinrichtung.

Die Steuereinrichtung STE besteht im wesentlichen aus einem programmgesteuerten Mikrocontroler MC, der schreibend und lesend auf Speicherbausteine SPE zugreifen kann. Der Microcontroler MC steuert und kontrolliert alle wesentlichen Elemente und Funktionen der Funkstation, steuert im wesentlichen den Kommunikations- und Signalisierungsablauf, reagiert auf Tastatureingaben, indem er die entsprechenden Steuerprozeduren ausführt und ist auch für die Versetzung des Gerätes in unterschiedlich Betriebzustände zuständig.

Die Verarbeitungseinrichtung VE kann auch durch einen digitalen Signalprozessor DSP gebildet sein, der ebenfalls auf Speicherbausteine SPE zugreifen kann. In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden, Geräteinformationen, vom Benutzer eingegebene Informationen und während der Verarbeitung von Signalen entstehende Informationen gespeichert.

Der Hochfrequenzteil HF besteht aus der Sendeeinrichtung, mit einem Modulator und einem Verstärker und einer Empfangseinrichtung mit einem Demodulator und ebenfalls einem Verstärker. Der Sendeeinrichtung und der Empfangseinrichtung wird über den Synthesizer die Frequenz eines spannungsgeregelten Oszilators VCO zugeführt. Mittels des spannungsgesteuerten Oszillators VCO kann auch der Systemtakt zur Taktung von Prozessoreinrichtungen des Gerätes erzeugt werden. Zum Empfang und zum Senden von Signalen über die Luftschnittstelle eines Mobilfunksystems ist eine Antenneneinrichtung ANT vorgesehen.

Außerdem verfügt die Funkstation MS über Kontaktelemente zur Kontaktierung an die Schnittstelle der Teilnehmeridentifizierungsmodule SIM1,2, die auch mittels entsprechender Einsteckschächte MA1,2 oder anderer Mittel MA1,2 zur Aufnahme oder Halterung für die Teilnehmeridentifizierungsmodule SIM1,2 realisiert sein können. Die Mittel MA1,2 zur Aufnahme der Teilnehmeridentifizierungsmodule SIM1,2 und die Teilnehmeridentifizierungsmodule SIM1,2 können bei einer Ausführungsvariante der Erfindung auch integriert als Speichereinrichtung mit entsprechenden Inhalten ausgeführt sein. Ferner können die Teilnehmeridentifizierungsmodule SIM1,2 bei weiteren Ausführungsformen der Erfindung auch als Chipkarte mit Speichereinrichtungen zur Speicherung von teilnehmer- oder netzspezifischen Informationen und Prozessoreinrichtungen zur Ausführung von Funktionen, wie Authentifizierung und Nutzdatenverschlüsselung oder Steuerung von Diensten, versehen sein.

Der abwechselnde Empfang der unterschiedlichen Steuer- und/oder Nutzdaten durch eine einzige Empfangseinrichtung (nicht gezeigt) kann durch eine automatische oder manuelle - vom Benutzer vorgenommene - Umschaltung realisiert werden. Dies bietet sich insbesondere in TDMA (Zeitvielfachzugriff)-Systemen an. Dazu kann die Funkstation und die Empfangseinrichtung jeweils während eines ersten Zeitschlitzes auf den Empfang von Steuerdaten und/oder Nutzdaten eines ersten Kommunikationsnetzes geschaltet werden und während eines zweiten Zeitschlitzes auf den Empfang von Steuerdaten und/oder Nutzdaten eines zweiten Kommunikationsnetzes geschaltet werden.

Gemäß einer Ausführungsvariante der Erfindung ist zum parallelen Empfang von unterschiedlichen Kommunikationsnetzen zugeordneten Steuerdaten und gegebenenfalls Nutzdaten auf der Basis der empfangenen Steuerdaten die Empfangseinrichtung EE aus zwei Teilempfangseinrichtungen EE1, EE2 bestehend ausgelegt. Dies ermöglicht einen gleichzeitigen Empfang von Steuer- und/oder Nutzdaten, die auf unterschiedlichen Kommunikationsnetzen basieren. Je nach Ausführungsvariante der Teilempfangseinrichtungen EE1, EE2 können dabei dennoch Teile der Hochfrequenzeinrichtung und der Signalverarbeitungseinrichtungen von beiden Teilempfangseinrichtungen gemeinsam genützt werden.

Das parallele Senden von Steuer- und/oder Nutzdaten kann entsprechend dem oben erläuterten Empfang von Steuer- und/oder Nutzdaten erfolgen.

Die Erfindung sieht vor, daß die Steuereinrichtung STE der Funkstation MS derart ausgestaltet ist, daß ein Weiterschalten einer bestehenden Verbindung eines ersten Kommunikationsnetzes auf eine zweite Kommunikationsverbindung, die auf einem zweiten Kommunikationsnetz basiert, möglich ist. Dazu können die entsprechenden Steuer- und/oder Nutzdaten in einer Speichereinrichtung SPE zwischengespeichert werden und mittels der Steuereinrichtung und gegebenenfalls der Verarbeitungseinrichtung auf die entsprechenden Codiervorschriften und Protokolle des zweiten Kommunikationsnetzes umgesetzt werden. Auf gleiche Weise ist bei einer weiteren Ausführungsform der Erfindung das Umschalten zwischen zwei Kommunikationsverbindungen die auf unterschiedlichen Kommunikationsnezten basieren, vorgesehen.

Eine andere Ausgestaltung der Erfindung sieht vor, daß der Betrieb der Funkstation auf der Basis einzelner Teilnehmeridentifizierungsmodule SIM1,2 einzeln gesperrt werden kann, so daß die Erreichbarkeit unter bestimmten Rufnummern unterdrückt werden kann, und der von der Mobilstation ausgelöste Verbindungsaufbau über bestimmte Kommunikationsnetze, die beispielsweise nicht den aktuell gewünschten Vergebührungsanforderungen des Nutzers entsprechen, gesperrt werden kann.

Insbesondere beim Einsatz der Erfindung in Multimode- bzw. Multiband-Mobilfunktelefonen kann eine bessere Erreichbarkeit und eine flexiblere Identifizierung des Benutzers ermöglicht werden.

## Patentansprüche

1. Funkstation (MS)
- mit Mittel (MA1,2) zur Aufnahme mehrerer unterschiedlicher Teilnehmeridentifizierungsmodule (SIM1,2), wobei unterschiedliche Teilnehmeridentifizierungsmodule (SIM1,2) zur Identifizierung in unterschiedlichen Kommunikationsnetzen (KN1,2) vorgesehen sind, und
- mit einer Empfangseinrichtung (EE1,2) zum parallelen Empfang von unterschiedlichen Kommunikationsnetzen (KN1,2) zugeordneten Steuerdaten auf Basis der entsprechenden unterschiedlichen Teilnehmeridentifizierungsmodule (SIM1,2), charakterisiert durch
- Mittel (STE) zum Umschalten zwischen einer ersten Kommunikationsverbindung, die auf der Identifizierung mittels eines ersten Teilnehmeridentifizierungsmoduls (SIM1) basiert, und einer zweiten Kommunikationsverbindung, die auf der Identifizierung mittels eines zweiten Teilnehmeridentifizierungsmoduls (SIM2) basiert, und/oder
- Mittel (STE) zum Weiterschalten einer ersten Kommunikationsverbindung, die auf der Identifizierung mittels eines ersten Teilnehmeridentifizierungsmoduls (SIM1) basiert, auf eine zweite Kommunikationsverbindung, die auf der Identifizierung mittels eines zweiten Teilnehmeridentifizierungsmoduls (SIM2) basiert.

2. Funkstation (MS) nach Anspruch 1 mit
- einer Empfangseinrichtung (EE1,2) zum parallelen Empfang von unterschiedlichen Kommunikationsnetzen zugeordneten Nutzdaten auf der Basis empfangener unterschiedlichen Kommunikationsnetzen (KN1,2) zugeordneter Steuerdaten.

3. Funkstation (MS) nach einem vorstehenden Anspruch mit
- einer Sendeeinrichtung (SE1,2) zum parallelen Senden von unterschiedlichen Kommunikationsnetzen (KN1,2) zugeordneten Steuerdaten auf der Basis der entsprechenden unterschiedlichen Teilnehmeridentifizierungsmodule (SIM1,2).

4. Funkstation (MS) nach einem vorstehenden Anspruch mit
- einer Sendeeinrichtung (SE1,2) zum parallelen Senden von unterschiedlichen Kommunikationsnetzen (KN1,2) zugeordneten Nutzdaten auf der Basis empfangener und gesendeter unterschiedlichen Kommunikationsnetzen (KN1,2) zugeordneter Steuerdaten.

5. Funkstation (MS) nach einem vorstehenden Anspruch mit
- Speichereinrichtung (SPE) zur Speicherung von Teilnehmer- und/oder Kommunikationsinformationen, die unterschiedlichen Kommunikationsnetzen (KN1,2) zugeordnet sind.

6. Funkstation (MS) nach einem vorstehenden Anspruch, bei welcher der Betrieb auf der Basis unterschiedlicher Teilnehmeridentifizierungsmodul (SIM1, 2) einzeln sperrbar ist.

## Claims

1. Radio communication station (MS)
- having means (MA1,2) for accommodating a plurality of different subscriber identity modules (SIM1,2), different subscriber identity modules (SIM1,2) being provided for identification in different communication networks (KN1,2), and
- having a receiving device (EE1,2) for parallel reception of control data assigned to different communication networks (KN1,2) on the basis of the corresponding different subscriber identity modules (SIM1,2), **characterized by**
- means (STE) for switching over between a first communication connection based on identification by means of a first subscriber identity module (SIM1), and a second communication connection based on identification by means of a second subscriber identity module (SIM2), and/or
- means (STE) of transferring a first communication connection based on identification by means of a first subscriber identity module (SIM1) to a second communication connection based on identification by means of a second subscriber identity module (SIM2).

2. Radio communication station (MS) according to Claim 1 having
- a receiving device (EE1,2) for parallel reception of user data assigned to different communication networks on the basis of received control data assigned to different communication networks (KN1,2).

3. Radio communication station (MS) according to a preceding Claim, having
- a transmitting device (SE1,2) for parallel transmission of control data assigned to different communication networks (KN1,2) on the basis of the corresponding different subscriber identity modules (SIM1,2).

4. Radio communication station (MS) according to a preceding Claim, having
- a transmitting device (SE1,2) for parallel transmission of user data assigned to different communication networks (KN1,2) on the basis of received and transmitted control data assigned to different communication networks (KN1,2).

5. Radio communication station (MS) according to a preceding Claim, having
- a memory device (SPE) for storing subscriber and/or communications information assigned to different communication networks (KN1,2).

6. Radio communication station (MS) according to a preceding Claim, wherein operation can be individually blocked on the basis of different subscriber identity modules (SIM1, 2).

## Revendications

1. Station radio (MS) équipée
- de moyens (MA1, 2) pour le logement de plusieurs modules d'identification d'abonné différents (SIM1, 2), différents modules d'identification d'abonné (SIM1, 2) étant prévus pour l'identification dans différents réseaux de communication (KN1, 2), et équipée
- d'un dispositif de réception (EE1, 2) pour la réception en parallèle de données de commande affectées à différents réseaux de communication (KN1, 2) sur la base des différents modules d'identification d'abonné correspondants (SIM1, 2), **caractérisés par** des moyens (STE) de commutation entre une première liaison de communication, basée sur l'identification au moyen d'un premier module d'identification d'abonné (SIM1), et d'une seconde liaison de communication, basée sur l'identification au moyen d'un second module d'identification d'abonné (SIM2), et/ou équipée
- de moyens (STE) de transfert d'une première liaison de communication, basée sur l'identification au moyen d'un premier module d'identification d'abonné (SIM1), sur une seconde liaison de communication, basée sur l'identification au moyen d'un second module d'identification d'abonné (SIM2).

2. Station radio (MS) selon la revendication 1, équipée
- d'un dispositif de réception (EE1, 2) pour la réception en parallèle de différentes données utiles affectées à différents réseaux de communication sur la base de données de commande reçues affectées à différents réseaux de communication (KN1, 2).

3. Station radio (MS) selon l'une des revendications précédentes, équipée
- d'un dispositif d'émission (SE1, 2) pour l'émission en parallèle de données de commande affectées à différents réseaux de communication (KN1, 2) sur la base des différents modules d'identification d'abonné correspondants (SIM1, 2).

4. Station radio (MS) selon l'une des revendications précédentes, équipée
- d'un dispositif d'émission (SE1, 2) pour l'émission en parallèle de données utiles affectées à différents réseaux de communication (KN1, 2) sur la base de données de commande reçues et émises affectées à différents réseaux de communication (KN1, 2).

5. Station radio (MS) selon l'une des revendications précédentes, équipée
- d'un dispositif de mémorisation (SPE) pour la mémorisation d'informations d'abonnés et/ou de communication, qui sont affectées à différents réseaux de communication (KN1, 2).

6. Station radio (MS) selon l'une des revendications précédentes, dans laquelle le fonctionnement peut être bloqué individuellement sur la base d'un module d'identification d'abonné différent (SIM1, 2).
